# EUROPÄISCHE PATENTSCHRIFT

(11) **EP 0 947 530 B1**
(45) Veröffentlichungstag und Bekanntmachung des Hinweises auf die Patenterteilung: **09.01.2002**
(21) Anmeldenummer: 99105729.0
(22) Anmeldetag: 22.03.1999
(51) Int. Cl.: C08G 18/76, C07C 263/20

(54) **Verfahren zur Farbaufhellung von polymerem Diphenylmethandiisocyanat sowie die Verwendung von aufgehelltem Diphenylmethandiisocyanat bei der Herstellung von Polyurethankunststoffen**
Process for brigthening polymeric diphenylmethane diisocyanate and use of brightened diphenylmethane diisocyanate for the preparation of polyurethane plastics
Procédé de blanchiment de diphénylméthane diisocyanate polymérique et utilisation de diphénylméthane diisocyanate pour la préparation de plastiques polyuréthaniques

(30) Priorität: 03.04.1998 DE 19815055
(43) Veröffentlichungstag der Anmeldung: 06.10.1999
(73) Patentinhaber: BAYER AG, 51368 Leverkusen (DE)
(72) Erfinder: Morell Torrel, Juan, 43480 Vila-Seca (ES); Vidal Rodriguez, Salvador, 43080 Tarragona (ES); Requena Alda, Vicente, 43850 Cambrils (ES)

(56) Entgegenhaltungen:
- EP-A- 0 538 500
- EP-A- 0 676 391
- EP-B- 0 114 970
- US-A- 5 136 087

## Beschreibung

Die Erfindung betrifft ein Verfahren zur Herstellung von Polyisocyanaten oder Polyisocyanatgemischen der Diphenylmethanreihe nachfolgend MDI-Polymer genannt, durch Bestrahlung mit Licht bestimmter Wellenlänge und die so erhaltenen Polyisocyanate und ihre Verwendung bei der Herstellung von Polyurethankunststoffen.

Die großtechnische Herstellung von Isocyanaten durch Umsetzung von Aminen mit Phosgen in Lösungsmitteln ist bekannt und in der Literatur ausführlich beschrieben (Ullmanns Enzyklopädie der technischen Chemie, 4. Auflage, Band 13, Seite 347 bis 357, Verlag Chemie GmbH, D-6940 Weinheim, 1977). Auf Basis dieses Verfahrens wird das Polyisocyanatgemisch hergestellt, das als Polyisocyanatkomponente bei der Herstellung von Polyurethanschäumen und anderen nach den Polyadditionsverfahren hergestellten Polyurethankunststoffen dient.

Es ist allgemein bekannt, daß bei diesem Verfahren auch unerwünschte Farbstoffe oder farbgebende Komponenten gebildet werden, die auch bei der Weiterverarbeitung zu Polyurethanschäumen oder anderen Polyurethankunststoffen erhalten bleiben.

Als Maß für die Verfärbung des Polyisocyanates dient der Extinktionswert bei verschiedenen Wellenlängen.

Seit längerer Zeit ist die Reduzierung der Farbwerte von MDI-Polymer das Ziel zahlreicher Versuche und Arbeiten, die in der Literatur beschrieben sind.

So beschreibt beispielsweise die DE-A 94-4411911 die Behandlung von solchen Isocyanatgemischen mit Wasserstoff in Gegenwart von Trägerkatalysatoren.

EP-A 0 114 970 beschreibt ein Verfahren mit Addition von Wasser zum Reaktionsprozeß. Aus DE-A 4 318 018 geht ein Prozeß hervor, die eine Farbaufhellung unter Zuhilfenahme von Salzsäure und Antioxidantien bewirkt.

Nachteilig an allen diesen Prozessen ist, daß sie technisch aufwendig sind und/oder die Verwendung isocyanatfremder Hilfsstoffe erfordern.

Aufgabe war es daher, ein technisch einfaches und sicheres Verfahren zu entwickeln, daß es erlaubt, Polyisocyanate oder Polyisocyanatgemische der Diphenylmethanreihe mit möglichst niedrigen Farbwerten herzustellen und ohne das deren übrige anwendungstechnische Eigenschaften verändert werden.

Diese Aufgabe konnte überraschenderweise mit dem erfindungsgemäßen Verfahren gelöst werden.

Gegenstand der Erfindung ist ein Verfahren zur Herstellung von MDI-Polymer, bei dem das nach der Phosgenierung der Amine entstehende MDI mit Licht einer Wellenlänge zwischen 250 nm und 2.500 nm bestrahlt wird.

Das erfindungsgemäße Verfahren wird durchgeführt, indem das Produkt durch einen Glasreaktor im Kreislauf gepumpt und mit Licht bestimmter Wellenlängen bestrahlt wird. Bevorzugt ist Licht im UV-Bereich, insbesondere zwischen 300 und 450 nm und Reaktoren aus Quarzglas oder anderes für die angewandte Wellenlänge nicht absorbierende Glas. Je nach Art des eingesetzten Reaktors kann die Bestrahlung von außen oder innen erfolgen. Zur Erhöhung der Lichtausbeute können die Reaktoren oder Lampen auch in verspiegelten Gehäusen eingebaut werden.

Üblicherweise wird das MDI-Polymer für einen Zeitraum von 2 s bis 30 min, insbesondere 5 s bis 10 min bestrahlt.

Das als Ausgangsmaterial für das erfmdungsgemäße Verfahren eingesetzte MDI-Polymer umfaßt technische Gemische von 4,4'-Diisocyanatodiphenylmethan mit bis zu 60 Gew.-%, vorzugsweise bis zu 10 Gew.-%, bezogen auf das Gesamtgemisch, an 2,4-Diisocyanatdiphenylmethan, sowie gegebenenfalls mit bis zu 5 Gew.-%, bezogen auf das Gesamtgemisch an 2,2'-Diisocyanatodiphenylgemisch, die neben dem genannten Diisocyantodiphenylmethanisomeren bis zu 70 Gew.-%, bezogen auf das Gemisch, an höherfunktionellen Polyisocyanaten der Diphenylmethanreihe aufweisen.

Ebenfalls geeignet für den Einsatz als Ausgangsmaterial für das erfindungsgemäße Verfahren sind Lösungen dieser technischen Gemische in organischen Lösemitteln, insbesondere Monochlorbenzol.

In vorteilhafter Weise können so erfindungsgemäß die Extinktionswerte (gemessen bei 520 nm) von MDI-Polymer sehr einfach ohne die Verwendung weiterer Hilfsstoffe erniedrigt werden.

Erfindungsgemäß aufgehelltes MDI-Polymer kann als Isocyanatkomponente zur Herstellung von Polyurethanschäumen und anderem nach dem Polyadditionsverfahren hergestellten Polyurethankunststoffen eingesetzt werden. Ein weiterer Gegenstand der Erfindung ist daher die Verwendung von erfindungsgemäß aufgehelltem MDI-Polymer als Isocyanatkomponente von Polyurethanderivaten für farbempfindliche Anwendungen zur Herstellung von Polyurethankunststoffen.

Die Erfindung soll anhand der nachfolgenden Beispiele näher erläutert werden.

### Beispiel 1

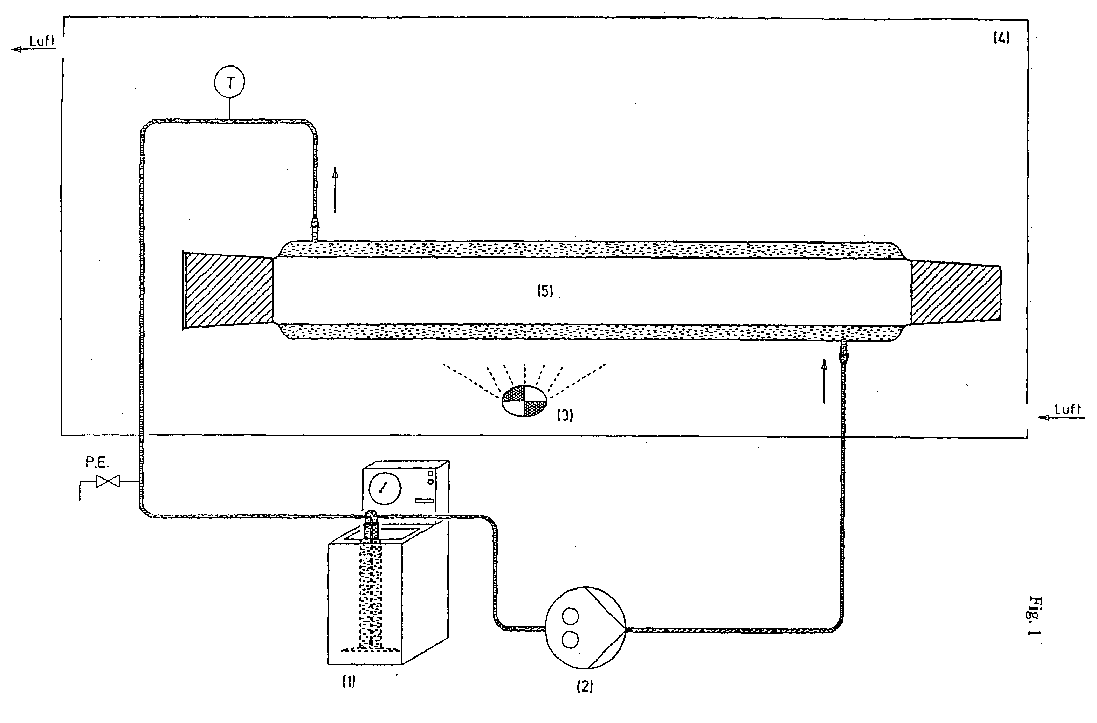

Man verwendet eine Apparatur nach Figur 1, bestehend aus einem Glasreaktor mit einer Kapazität von 300 cc und 1.250 cm² Ausstrahlungsfläche. Das Produkt wird durch den Reaktor in Kreislauf über eine peristaltische Pumpe gepumpt und mit einer UV-Lampe Philips HPA 400 S von 400 W ausgestrahlt.

Für den Versuch wird MDI mit einer Farbe entsprechend einem Extinktionswert E-520 von 0,048 aus der technischen Produktion entnommen. 700 g dieses Produktes wurden über den Reaktor mit einem Fluß von 120 g/min ausgestrahlt.

Nach 15 Minuten effektiver Ausstrahlung der gesamten Masse sinkt die E-520 auf 0,025, nach 30 Minuten auf 0,020 und nach 45 Minuten auf 0,016.

Alle anderen Qualitätsparameter des Produktes bleiben nach der Strahlung unverändert. Die aus ausgestrahltem MDI hergestellten MDI-Modifizierungen erfüllen alle Qualitätsspezifikationen.

### Beispiel 2

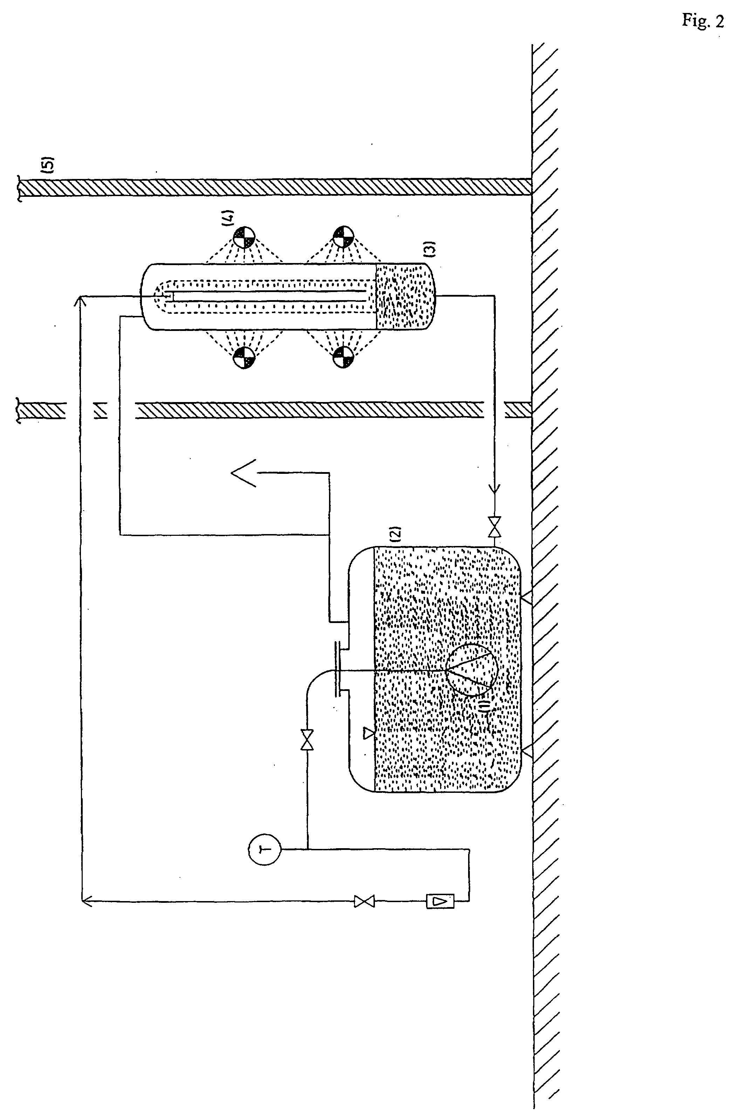

Man verwendet eine Apparatur nach Figur 2, bestehend aus einem Fallfilmreaktor mit Außenwand aus Glas. Das Produkt wird auf den Kopf des Reaktors in Kreislauf gepumpt, wobei eine Dünnschicht entsteht. Die Schichtdicke kann über Flußregelung der gepumpten Menge geregelt werden.

Die Ausstrahlungsfläche des Reaktors entspricht 1,25 m². Für die Ausstrahlung werden 8 UV-Lampen Philips HPA 400 S von 400 W verwendet.

Für den Versuch wird MDI mit einer Farbe entsprechend einem Extinktionswert E-520 von 0,043 aus der technischen Produktion entnommen. 250 kg dieses Produktes wurden über den Reaktor mit einem Fluß von 500 kg/h ausgestrahlt. Vor der Inbetriebnahme des Reaktors wird die gesamte Installation mit Stickstoff ausgeblasen.

Nach 12 Minuten effektiver Ausstrahlung der gesamten Masse sinkt die E-520 auf 0,030 und nach 14 Minuten auf 0,027.

Alle anderen Qualitätsparameter des Produktes bleiben wie im Beispiel 1 nach der Strahlung unverändert. Auch die aus ausgestrahltem MDI hergestellten MDl-Modifizierungen erfüllen alle Qualitätsspezifikationen.

Das Verfahren läßt sich über Anpassung des Reaktordesigns sowie der verwendeten elektrischen Leistung an der auszustrahlenden Produktmenge optimieren.

### Figur 1 Durchführung gemäß Beispiel 1

(1) Kryostat
(2) Peristallische Pumpe
(3) Ausstrahlungslampe
(4) Schutzwand
(5) Kühler

### Figur 2 Durchführung gemäß Beispiel 2

(1) Pumpe
(2) Behälter
(3) Reaktor
(4) Ausstrahlungslampe
(5) Schutzwand

## Patentansprüche

1. Verfahren zur Farbaufhellung von polymerem Diphenylmethandiisocyanat durch Bestrahlung mit Licht einer Wellenlänge von 250 nm bis 2.500 nm.

2. Verfahren nach Anspruch 1, **dadurch gekennzeichnet, daß** das polymere Diphenylmethandiisocyanat mit Licht einer Wellenlänge von 300 nm bis 450 nm bestrahlt wird.

3. Verfahren nach einem der vorherigen Ansprüche, **dadurch gekennzeichnet, daß** man als Polyisocyanate der Diphenylmethanreihe, technische Polyisocyanatgemische, die neben 4,4'-, 2,4'- und 2,2'-Isomeren des Diphenylmethandiisocyanats bis zu 70 Gew.-%, bezogen auf das Gesamtgemisch, an höherfunktionellen Polyisocyanaten der Diphenylmethanreihe enthalten, einsetzt.

4. Verfahren nach einem der vorherigen Ansprüche, **dadurch gekennzeichnet, daß** die Bestrahlung für eine Zeitdauer von 2s bis 30 min durchgeführt wird.

5. Verfahren nach einem der vorherigen Ansprüche, **dadurch gekennzeichnet, daß** in organische Lösungsmiteln gelöstes polymeres Diphenylmethandiisocyanat eingesetzt wird.

6. Verfahren nach Anspruch 5, **dadurch gekennzeichnet, daß** in Monochlorbenzol gelöstes polymeres Diphenylmethandiisocyanat eingesetzt wird.

7. Verwendung der gemäß den Ansprüchen 1 bis 6 aufgehellten Polyisocyanatgemische als Isocyanatkomponente bei der Herstellung von Polyurethankunststoffen nach dem Isocyanat-Polyadditionsverfahren.

## Claims

1. Process for lightening the colour of polymeric diphenylmethane diisocyanate by irradiation with light of a wavelength of from 250 nm to 2,500 nm.

2. Process according to claim 1, **characterised in that** the polymeric diphenylmethane diisocyanate is irradiated with light of a wavelength of from 300 nm to 450 nm.

3. Process according to one of the preceding claims, **characterised in that** the polyisocyanates of the diphenylmethane series used are technical polyisocyanate mixtures which, in addition to 4,4'-, 2,4'-and 2,2'-isomers of diphenylmethane diisocyanate, contain up to 70 wt.%, based on the total mixture, of higher functional polyisocyanates of the diphenylmethane series.

4. Process according to one of the preceding claims, **characterised in that** the irradiation is carried out for a period of from 2 s to 30 min.

5. Process according to one of the preceding claims, **characterised in that** polymeric diphenylmethane diisocyanate dissolved in organic solvents is used.

6. Process according to claim 5, **characterised in that** polymeric diphenylmethane diisocyanate dissolved in monochlorobenzene is used.

7. Use of the polyisocyanate mixtures brightened according to claims 1 to 6 as the isocyanate component in the production of polyurethane plastics by the isocyanate polyaddition process.

## Revendications

1. Procédé de blanchiment de diphénylméthane diisocyanates polymères par irradiation avec de la lumière ayant une longueur d'onde comprise dans l'intervalle allant de 250 nm à 2500 nm.

2. Procédé suivant la revendication 1, **caractérisé en ce que** le diphénylméthane-diisocyanate polymère est irradié avec de la lumière ayant une longueur d'onde comprise dans l'intervalle allant de 300 nm à 450 nm.

3. Procédé suivant l'une quelconque des revendications précédentes, **caractérisé en ce que** l'on met en oeuvre comme polyisocyanate de la série des diphénylméthanes, des mélanges techniques de polyisocyanates, qui contiennent outre les isomères 4,4', 2,4' et 2,2' du diphénylméthane-diisocyanate, jusqu'à 70% en poids, sur base du poids total, de polyisocyanates polyfonctionnels de la série des diphénylméthanes.

4. Procédé suivant l'une quelconque des revendications précédentes, **caractérisé en ce que** l'irradiation est réalisée pendant une période allant de 2 secondes à 30 minutes.

5. Procédé suivant l'une quelconque des revendications précédentes, **caractérisé en ce que** l'on met en oeuvre des diphénylméthane-diisocyanates polymères dissous dans un solvant organique.

6. Procédé suivant la revendication 5, **caractérisé en ce que** l'on met en oeuvre des diphénylméthane-diisocyanates polymères dissous dans le monochlorobenzène.

7. Utilisation des mélanges de polyisocyanates blanchis suivant les revendications 1 à 6, comme composant isocyanate dans la préparation de plastiques polyuréthanniques d'après le procédé de polyaddition d'isocyanate.
